Europäisches Patentamt

European Patent Office

Office européen des brevets

(19)

(11) Numéro de publication: **0 090 121**
**A1**

(12) # DEMANDE DE BREVET EUROPEEN

(21) Numéro de dépôt: **82401005.2**

(22) Date de dépôt: **02.06.82**

(51) Int. Cl.³: **F 02 D 5/02, F 02 M 59/30**

(30) Priorité: **29.03.82 FR 8205292**

(43) Date de publication de la demande: **05.10.83**
**Bulletin 83/40**

(84) Etats contractants désignés: **AT BE CH DE GB IT LI NL SE**

(71) Demandeur: **RENAULT SPORT, 1/15, Avenue du Président Kennedy, F-91170 Viry-Chatillon (FR)**

(72) Inventeur: **Boudy, Jean-Pierre, 2, rue des Pâtis, F-91540 Mennecy (FR)**
Inventeur: **Coquery, Jean, 19, rue de Fresnes, F-92160 Antony (FR)**

(74) Mandataire: **Réal, Jacques et al, Régie Nationale des Usines Renault 8-10, avenue Emile Zola, F-92109 Boulogne-Billancourt (FR)**

(54) **Dispositif de régulation électronique de pompe d'injection à came tridimensionnelle pour un moteur thermique.**

(57) Dispositif de régulation de l'alimentation en carburant d'un moteur à combustion interne par exemple suralimenté par l'énergie des gaz d'échappement et agissant sur un organe approprié tel qu'au moins un groupe turbocompresseur, et du type comportant une pompe d'injection où la course des pistons d'injection est réglée par une came à deux axes d'actionnement.

La came est déplacée en rotation par un moteur électrique alimenté par un circuit électronique de calcul et de contrôle qui reçoit les informations relatives aux paramètres suivants:
- pression de l'air P2,
- température de l'air à l'admission T2,
- vitesse de rotation du moteur N,

et le déplacement de la came est repéré par un potentiomètre de recopie 24.

EP 0 090 121 A1

# DISPOSITIF DE REGULATION ELECTRONIQUE DE POMPE D'INJECTION A CAME TRIDIMENSIONNELLE POUR UN MOTEUR THERMIQUE

La présente invention s'applique à l'alimentation en carburant d'un moteur à combustion interne du type comportant une pompe d'injection où la course des pistons d'injection est réglée par une came à deux axes d'actionnement.

Les pompes d'injection de ce type comportent en général, dans un corps de pompe : un arbre à cames d'actionnement de la pompe agissant sur des poussoirs reliés à des pistons de pompe mobiles dans des alésages et rappelés en position par des ressorts ou par la pression d'alimentation de la pompe. La circulation du carburant dans les cylindres de la pompe constitués par les alésages de guidage des pistons est contrôlée par des clapets d'aspiration et de refoulement tandis que le débit refoulé à chaque actionnement des pistons par l'arbre à came, est contrôlé par une came de réglage généralement dénommée "came de contrôle tridimensionnelle". Cette came de réglage se déplace en effet longitudinalement sous l'action de la tirette d'accélérateur du moteur et subit, en même temps, un reglage par rotation autour de son axe sous l'action de la pression relative de l'air au collecteur d'admission agissant sur un piston à l'encontre d'un ressort de rappel. La surface de la came se déplace ainsi dans l'espace tout en restant en contact ponctuel avec le palpeur d'une plaque de butée de point mort bas des pistons de pompe et le débit de carburant par coup de piston est réglé en fonction de l'accélération demandée par le conducteur (et matérialisée par l'ouverture du papillon des gaz) et respectivement de la pression d'admission de l'air dans les cylindres du moteur.

Avec un tel système, le réglage du débit de carburant, en fonction de l'ouverture du papillon des gaz et donc de l'accélération demandée par le conducteur et en fonction de la pression d'admission de l'air au moteur, ne permet pas de prendre en compte, surtout pendant les phases

transitoires, tous les paramètres qui régissent le débit d'air aspiré par le moteur et la richesse du mélange carburé. En effet, le débit massique d'air entrant dans les cylindres est, non seulement proportionnel à sa pression absolue d'admission, mais aussi inversement proportionnel à sa température absolue. Le débit d'air réellement aspiré par les cylindres est également fonction de la vitesse de rotation du moteur et la richesse du mélange carburé peut varier dans des limites assez larges sans perturber sensiblement l'allumage, les mélanges pauvres donnant les meilleurs rendements du moteur mais aussi les températures d'échappement les plus élevées, susceptibles, dans le cas d'un moteur suralimenté par un turbo-compresseur, d'en dégrader la turbine.

L'un des buts de la présente invention est de mieux intégrer dans le système de contrôle du débit de carburant les divers paramètres de fonctionnement du moteur. Par l'interposition de relais électroniques et électromécaniques entre les capteurs des paramètres du moteur et respectivement le moteur de réglage de la came de contrôle tridimensionnelles, la commande est mieux amortie; le dispositif de réglage selon l'invention se propose d'améliorer la sensibilité et la stabilité de la commande de l'accélération du moteur.

A cet effet, le dispositif de régulation de l'alimentation en carburant d'un moteur à combustion interne du type comportant une pompe d'injection où la course des pistons d'injection est réglée par une came à deux axes d'actionnement, à savoir en translation axiale et en rotation, les déplacements de la came suivant l'un desdits axes étant commandés en fonction de la position du papillon des gaz, est caractérisé en ce que les déplacements de la came suivant l'autre axe sont commandés par l'intermédiaire d'un moteur électrique alimenté par un circuit électronique de calcul et de contrôle sensible à la masse d'air admise par cycle dans les cylindres du moteur, la position de la came suivant ledit autre axe d'actionnement étant repérée par un moyen électrique et/ou électronique tel qu'un potentiomètre de recopie apte à retransmettre au circuit électronique la position de la came suivant cet autre axe.

Le circuit électronique de calcul et de contrôle, pour assurer le réglage de la position de la came, reçoit les informations relatives aux paramètres suivants :

       - pression de l'air à l'entrée du moteur,

       - température de l'air à l'entrée du moteur,

       - vitesse de rotation du moteur.

Selon une caractéristique importante de l'invention, dans le cas où le moteur à combustion interne est suralimenté par l'énergie des gaz d'échappement agissant sur un organe approprié tel qu'au moins un groupe turbo-compresseur, le circuit électronique reçoit, en plus, l'information relative à la température des gaz d'échappement à l'entrée de l'organe de suralimentation tel que la turbine du turbo-compresseur, et commande une augmentation de la richesse en carburant du mélange carburé introduit dans les cylindres du moteur, lorsque la température des gaz d'échappement dépasse une valeur de consigne.

L'information de pression de l'air à l'entrée du moteur est acquise à l'aide d'un capteur tel qu'un capteur piézo-résistif et traitée dans un amplificateur opérationnel apte à ajuster sa tension de sortie proportionnellement à la pression absolue de l'air.

La tension de sortie de l'amplificateur opérationnel est amplifiée dans un amplificateur à gain variable dans lequel la résistance de la boucle de contre-réaction est fonction de la température de l'air à l'entrée du moteur, par tout moyen approprié tel que le montage dans la boucle de contre-réaction d'une thermistance sensible à cette température à l'entrée du moteur.

Pour introduire le régime moteur dans le circuit électronique, l'amplificateur à gain variable comporte à son entrée inverse une résistance variable en fonction de la vitesse de rotation du moteur.

L'information relative à la température des gaz d'échappement à l'entrée de l'organe de suralimentation, est adressée sous forme de signal de température d'échappement à un comparateur pour être comparée à une valeur de température de consigne, cette comparaison déclenchant, lorsque la pression absolue de l'air à l'entrée du moteur dépasse une valeur minimale, l'application à l'amplificateur opérationnel fonctionnant en sommateur avec l'information de pression, d'un signal proportionnel au dépassement de cette température de consigne par la température des gaz d'échappement.

La sortie de l'amplificateur à gain variable est reliée, après ajustement éventuel dans un amplificateur de gain du point zéro et du gain global, à un organe comparateur travaillant en boucle ouverte et apte à comparer l'information issue de l'amplificateur de gain avec l'information de position de came délivrée par le potentiomètre de recopie, pour produire un signal d'actionnement du moteur électrique de déplacement de la came en rotation, signal dont la polarité de la tension détermine la rotation du moteur dans le sens propre à supprimer le signal d'actionnement.

Selon une autre caractéristique du circuit électronique selon l'invention, l'information de position délivrée par le potentiomètre de recopie, est dérivée et réinjectée par tout moyen tel qu'un condensateur, dans l'amplificateur à gain variable en vue d'amortir les déplacements du moteur électrique. Une fréquence de forme générale triangulaire et sensiblement de l'ordre du kilohertz (kHz) est injectée dans l'amplificateur de gain pour augmenter l'impédance apparente du moteur électrique de déplacement de la came afin de mieux le stabiliser autour de sa position d'équilibre et de diminuer ainsi sa consommation électrique en service.

La pédale d'accélérateur commande de préférence la translation de la came tandis que le moteur électrique commande sa rotation par l'intermédiaire d'organes de transmission tels que des trains d'engrenages pouvant comporter des réducteurs irréversibles à roues et vis sans fin.

D'autres buts, avantages et caractéristiques de l'invention apparaîtront à la lecture de la description d'un mode de réalisation de l'invention appliquée à un moteur à combustion interne suralimenté par turbo-compresseur, faite à titre non limitatif et en regard du dessin annexé où :

- *la figure 1* représente, en position de service et en coupe, la came de réglage tridimensionnelle d'une pompe d'injection de carburant dont la rotation est contrôlée par un circuit électronique de réglage ;

- *la figure 2* est un schéma synoptique du circuit électronique et électrique de contrôle de la rotation de la came tridimensionnelle .

- *la figure 3* est un schéma de montage du circuit de réinjection des informations de position de came dans le circuit électronique de contrôle ;

- *la figure 4* est un schéma de montage du circuit amplificateur et inverseur d'actionnement du moteur électrique de commande.

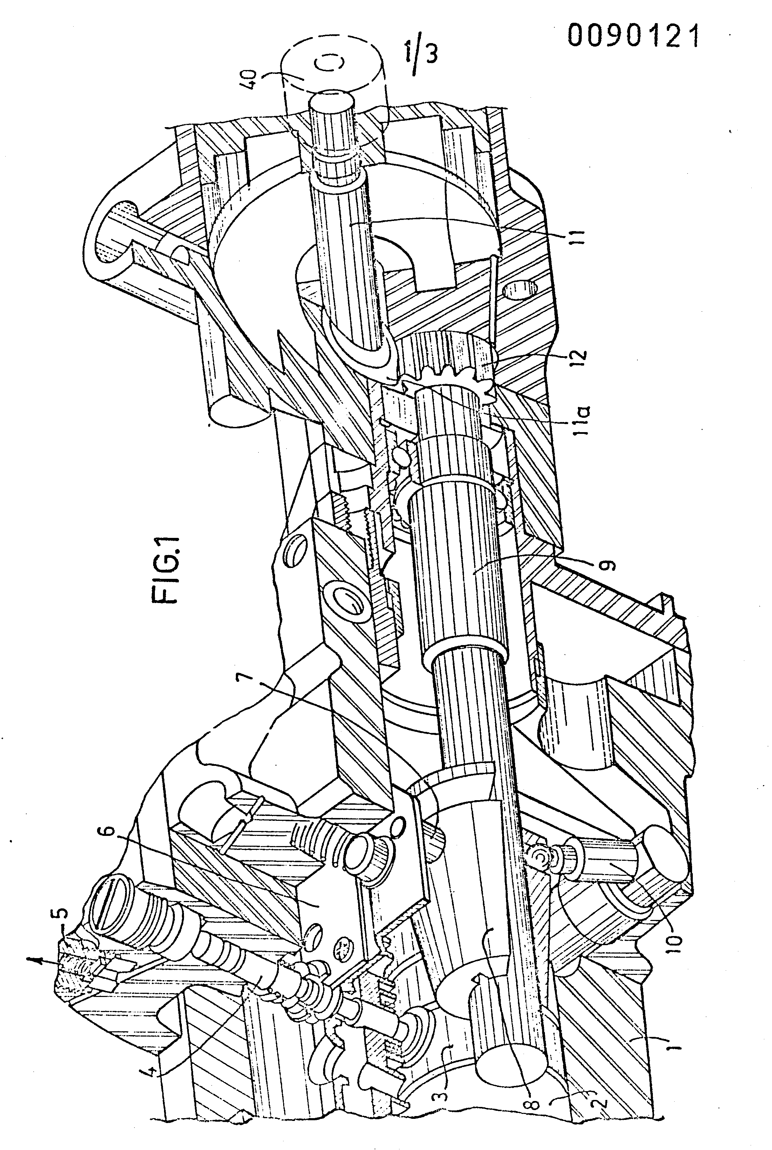

La partie de pompe d'injection de carburant, représentée en coupe sur la figure 1, fait apparaître, dans un corps de pompe 1 constitué de plusieurs pièces assemblées, un arbre à came 2 entraîné par le moteur équipé de la pompe et dont la came 3 actionne un piston d'injection 4 qui refoule le carburant sous pression, à travers un clapet anti-retour 5, vers le moteur. Le réglage du débit de la pompe s'effectue par limitation

du point mort bas du piston 4 à l'aide d'une plaque de butée 6 en appui sur un axe de butée fixe et, par un palpeur 7, sur une came de contrôle tridimensionnelle 8 solidaire en rotation d'un arbre 9 et susceptible de se déplacer axialement sous l'action d'une timonerie 10 reliée au câble d'accélérateur. L'arbre 9 tourne dans ses paliers sous l'action d'un axe rotatif 11 agissant par une vis sans fin 11a sur une roue dentée 12 solidaire de l'arbre 9. La position de la came 8 est contrôlée, dans les pompes d'injection de type connu, par la timonerie d'accélérateur 10 et par une crémaillère entraînée par un piston d'équilibrage qui est soumis sur l'une de ses faces à la pression d'admission de l'air à l'entrée des cylindres du moteur et, sur l'autre face reliée à l'atmosphère, à la force de réaction d'un ressort taré, de telle sorte que la rotation de la came par rapport à une position de départ est proportionnelle à la surpression de l'air d'admission par rapport à l'atmosphère.

Selon l'invention, le système pignon-crémaillère des systèmes connus est remplacé par l'ensemble à roue dentée 12 et à vis sans fin 11a entraînée par un moteur électrique 40 rélié en rotation à l'axe 11. L'actionnement du moteur 40 est contrôlé par un circuit électronique de réglage non plus seulement sensible à la surpression de l'air à l'entrée dans les cylindres, mais qui constitue un véritable calculateur d'injection qui intègre les paramètres suivants :

- la pression absolue P2 de l'air à l'entrée dans le moteur, qui constitue un bien meilleur critère de réglage que la surpression dès que le moteur fonctionne en altitude,
- la température T2 de l'air à l'entrée du moteur, qui constitue l'autre facteur de mesure du débit massique à l'entrée du moteur,
- la vitesse de rotation N du moteur qui conditionne aussi le débit massique d'air frais par coup de piston,
- la température d'échappement T3 mesurée à l'entrée de la turbine du turbo-compresseur. Cette mesure qui n'est pas indispensable pour le pilotage de l'injection, permet, par contre, d'agir sur la richesse du mélange carburé lorsque la température d'échappement augmente exagérément.

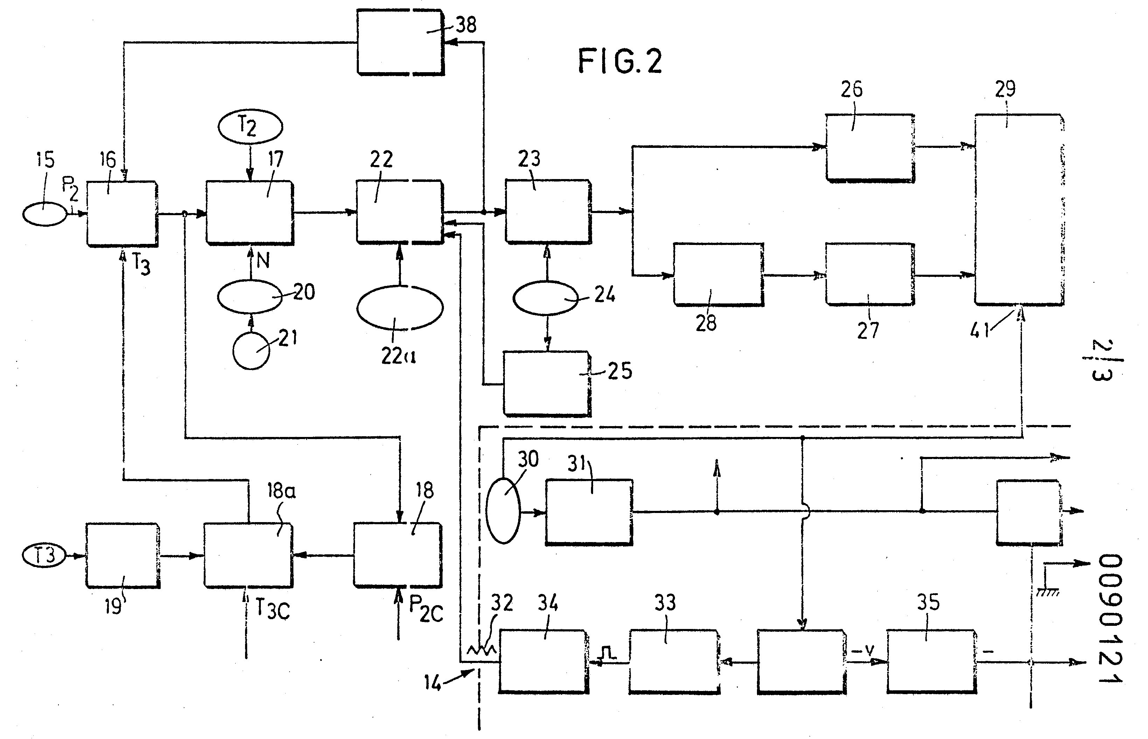

Le circuit électronique de contrôle de la rotation de la came 8, dont le schéma synoptique est représenté sur la figure 2, comporte divers points d'entrée des paramètres du moteur et un circuit d'alimentation extérieur 14.

L'information de pression P2 à l'entrée du moteur est acquise à l'aide d'un capteur piézo résistif 15 et traitée dans un amplificateur opérationnel 16 dont la tension de sortie est ajustée à zéro pour une pression absolue nulle au capteur. Cette tension de sortie est ensuite amplifiée dans un amplificateur à gain variable 17 dans lequel la résistance de la boucle de contre-réaction est variable et fonction de la température d'admission de l'air T2 dans le moteur suralimenté. Cette résistance variable est obtenue grâce au montage dans cette boucle d'une thermistance placée à l'aval du réfrigérant d'air de suralimentation. En outre, la variabilité du gain est également obtenue en modifiant la résistance d'attaque de l'entrée inverse de l'amplificateur 17 par commutation sur cette entrée d'un jeu de résistances 20 dont les valeurs successives sont fonction du régime moteur N.

L'information issue de l'amplificateur 16 est envoyée sur un comparateur de coupure 18 de l'information de température des gaz d'échappement T3 à l'entrée de la turbine du turbo-compresseur. L'information de température T3 n'est pas prise en compte si la valeur de la pression P2 issue de l'amplificateur 16 est inférieure à une valeur de consigne P2c. L'information de température turbine T3 est amplifiée à travers un amplificateur 19 et comparée à une valeur de consigne T3c dans un comparateur 18a. Si P2 est supérieur à P2c, l'amplificateur opérationnel 16 joue le rôle d'un sommateur en ajoutant, à l'information de pression absolue, une valeur proportionnelle au dépassement de la température de consigne T3c.

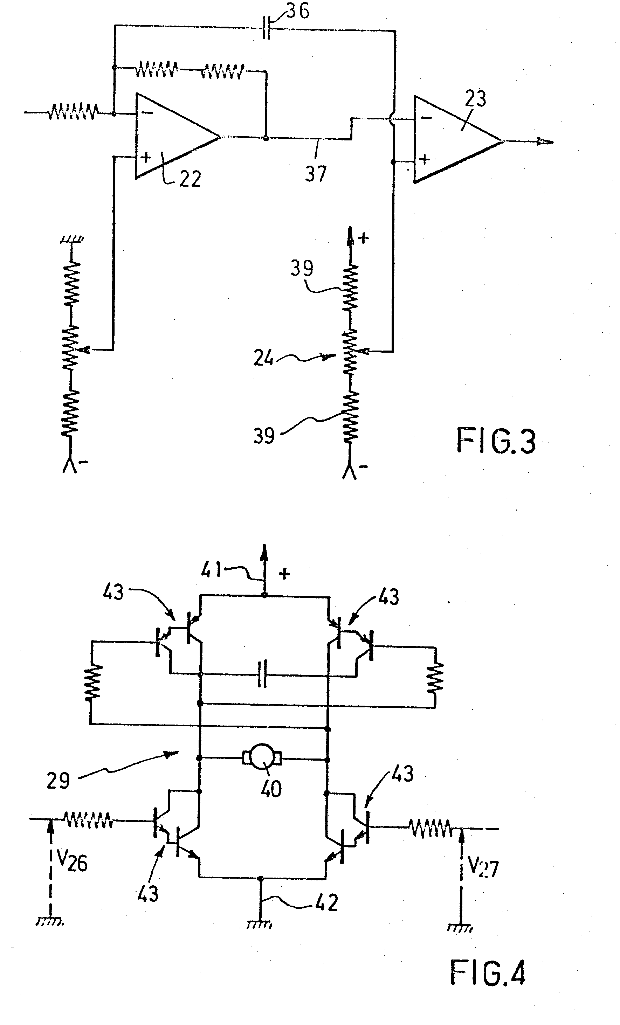

L'information issue de l'amplificateur 17 qui reçoit les indications de température d'air T2 à l'admission dans le moteur et les signaux de vitesse de rotation du moteur injectés par le jeu de résistances variables 20 et captés par tout moyen adéquat, tel qu'un compteur électronique 21 branché sur le circuit d'allumage du moteur, est ensuite traitée dans un amplificateur de gain 22 permettant d'ajuster le zéro et le gain global de la chaîne de calcul avant l'attaque d'un comparateur 23 travaillant en boucle ouverte. Le comparateur 23 compare l'information issue de l'amplificateur 22 avec celle fournie par un potentiomètre de recopie 24 de la position angulaire de la came 8 de la pompe. Un circuit d'amortissement 25 qui sera décrit plus loin en regard de la figure 3 réinjecte une partie du signal de recopie dans l'amplificateur de gain 22 doté de circuits 22a de réglage du gain et du zéro.

Le comparateur 23 alimente deux circuits conditionneurs 26 et 27, (l'un de ces circuits 26 étant alimenté directement et l'autre 27 via un inverseur 28), d'un amplificateur 29 de l'alimentation du moteur d'actionnement 40 de la vis sans fin 11a. Cet amplificateur 29 forme un pont
de commande du sens et de la durée de marche du moteur 40 et sera décrit
plus en détail en regard de la figure 4.

Le circuit d'alimentation extérieur 14 comporte une source électrique 30 constituée, par exemple, par la batterie du véhicule équipé
du système de contrôle d'injection de carburant selon l'invention, ainsi
qu'une alimentation stabilisée 31 vers les divers amplificateurs. Le
circuit 14 fournit, en outre, un signal triangulaire 32 à une fréquence
de l'ordre du kilohertz, par exemple 1,2 kHz dans l'exemple de réalisation choisi. Ce signal triangulaire 32 obtenu, via un multivibrateur 33
et un intégrateur 34 sous le contrôle d'un régulateur 35, est injecté
dans l'amplificateur de gain 22, en vue de mieux stabiliser le moteur
autour de sa position d'équilibre et de diminuer sa consommation en augmentant son impédance d'entrée. Le moteur est ainsi alimenté par de
courtes impulsions de courant et se déplace presque pas à pas d'une position d'équilibre à l'autre.

Le circuit d'amortissement 25 représenté sur la figure 3, est intercalé entre l'amplificateur de gain 22 et le comparateur 23. Le potentiomètre de recopie 24 alimenté entre deux tensions stabilisées opposées,
par exemple +8 Volts et -8 Volts pour une batterie de 12 Volts, est couplé par un condensateur 36 à l'entrée négative de l'amplificateur 22.
On doit remarquer également que la liaison 37, entre l'amplificateur 22
et le comparateur 23 est représentée, sur le schéma synoptique de la
figure 2, reliée à un limiteur de course 38 du moteur. Ce limiteur de
course 38 peut être constitué par des résistances dites de butée 39, placées aux extrémités du potentiomètre 24 et dont la valeur est de l'ordre
du dixième de celle du potentiomètre de recopie lui-même. Le condensateur 36 dont la capacité est par exemple de l'ordre de 0,3 µF, réinjecte
sur l'amplificateur 22 la dérivée du mouvement de rotation de la came 8,
dont l'image est captée sur le potentiomètre de recopie 24.

L'amplificateur 29, représenté sur la figure 4, a pour but d'amplifier en courant les tensions de commande V26 et V27 reçues des circuits conditionneurs direct 26 et inverse 27 et de changer le sens de
circulation de ce courant à travers le moteur 40 d'actionnement de la
vis sans fin 11a selon que la tension de commande vient du conditionneur
26 ou du conditionneur 27. La source de courant pour l'actionnement du moteur 40, est constituée par la batterie 30 dont le pôle positif est amené en 41 sur le circuit de l'amplificateur 29 relié à la masse en 42. Les interrupteurs du pont de commande du moteur 40 sont constitués par des cascades de transistors en montage de Darlington 43, permettant un grand gain en courant pour une grande impédance d'entrée.

Le fonctionnement du dispositif de régulation de la pompe d'injection va maintenant être explicité. Au démarrage du moteur, la surpression à l'admission du moteur est nulle, la température d'entrée de l'air est sensiblement la température atmosphérique, la vitesse de rotation du moteur est nulle et la température d'échappement est faible. Le circuit électronique a placé le moteur 40 au repos en position de butée basse et la régulation du débit de la pompe d'injection s'effectue uniquement via la timonerie 10 de commande mécanique.

Après le démarrage du moteur et dès qu'une surpression significative agit sur le capteur de pression 15, le circuit électronique est activé et des impulsions de courant délivrées à travers les cascades de transistors 43 actionnent le moteur 40 qui déplace la vis sans fin 11a vers une nouvelle position d'équilibre qui positionne la came tridimensionnelle 8 dans une position qui augmente le débit de carburant par coup de piston d'injection 4, et donc par coup de piston du moteur. L'augmentation de la température de l'air à l'admission du moteur introduite en T2 dans l'amplificateur 17 fait déplacer la vis sans fin 11a pour réduire le débit de carburant par coup de piston. Par contre, la vitesse de rotation du moteur introduite en 21, se traduit par la sélection d'une résistance donnée de l'ensemble 20 de résistances, dont la valeur détermine la correction à apporter au débit de carburant en fonction du remplissage en air frais des cylindres du moteur à cette vitesse de rotation.

Un aspect intéressant et original du réglage par le circuit électronique réside dans la possibilité de doser le carburant en mélange pauvre pour améliorer le rendement du moteur ainsi que son temps de réponse. Toutefois, la marche en mélange pauvre présente l'inconvénient pour les moteurs à turbo-compresseur d'induire des températures d'échappement plus élevées à l'entrée de la turbine. Le circuit électronique introduit dans le comparateur 18a la température des gaz d'échappement T3 à l'entrée de la turbine du turbo-compresseur et la compare à une valeur de consigne. Lorsque la température d'échappement T3 est supérieure à la valeur de consigne et si P2 est supérieur à P2c, le comparateur 18a transmet à l'amplificateur 16 un signal de correction proportionnel au dépassement

0090121

de la température de consigne et qui s'ajoute à l'information de pression absolue de l'air pour provoquer, par rotation de la vis sans fin 11a, un enrichissement du mélange carburé qui tend à stabiliser la température d'échappement au voisinage de la valeur de consigne choisie à une valeur inférieure à celle pour laquelle la température de la turbine commence à présenter un danger de dégradation.

Le réglage de la richesse par le circuit électronique pourrait également comporter une injection de signaux de détection de cliquetis qui provoquerait une augmentation ou une diminution de la richesse du mélange en vue de réduire le risque de cliquetis.

Le réglage de la came 8 à l'aide d'un moteur électrique 40 contrôlé par le circuit électronique permet de travailler avec le mélange carburé optima, soit pour la puissance du moteur, soit pour son rendement dans le cas de la marche en mélange pauvre. Ces divers réglages pourraient être modifiés à l'aide d'un potentiomètre agissant sur l'un ou plusieurs des amplificateurs du circuit électronique et réglable depuis le tableau de bord du véhicule pour permettre au pilote du véhicule de choisir l'une ou l'autre de ces options (puissance ou rendement) selon ses besoins.

Bien entendu, la présente invention n'est pas limitée aux modes de réalisation décrits et représentés et elle est susceptible de nombreuses variantes accessibles à l'homme de l'art, sans que l'on ne s'écarte de l'esprit de l'invention.

0090121

REVENDICATIONS

1.- Dispositif de régulation de l'alimentation en carburant d'un moteur à combustion interne, du type comportant une pompe d'injection où la course des pistons d'injection est réglée par une came à deux axes d'actionnement, à savoir translation axiale et rotation, les déplacements de la came suivant l'un desdits axes étant commandés en fonction de la position du papillon des gaz, caractérisé en ce que les déplacements de la came (8) suivant l'autre axe sont commandés par l'intermédiaire d'un moteur électrique (40) alimenté par un circuit électronique de calcul et de contrôle sensible à la masse d'air admise par cycle dans les cylindres du moteur, la position de la came (8) suivant ledit autre axe d'actionnement étant repérée par un moyen électrique et/ou électronique, tel qu'un potentiomètre de recopie (24), apte à retransmettre au circuit électronique la position de la came (8) suivant l'autre axe.

2.- Dispositif de régulation selon la revendication 1, caractérisé en ce que le circuit électronique de calcul et de contrôle, pour assurer le réglage de la position de la came (8), reçoit les informations relatives aux paramètres suivants :
          - pression de l'air (P2) à l'entrée du moteur,
          - température de l'air (T2) à l'entrée du moteur,
          - vitesse de rotation (20) du moteur.

3.- Dispositif de régulation selon la revendication 2, caractérisé en ce que dans le cas où le moteur à combustion interne est suralimenté par l'énergie des gaz d'échappement agissant sur un organe approprié tel qu'au moins un groupe turbo-compresseur, le circuit électronique reçoit. en plus, l'information relative à la température des gaz d'échappement (T3) à l'entrée de l'organe de suralimentation, tel que la turbine du turbo-compresseur, et commande une augmentation de la richesse en carburant du mélange carburé introduit dans les cylindres du moteur, lorsque la température des·gaz d'échappement dépasse une valeur de consigne.

4.- Dispositif de régulation selon la revendication 2 ou 3, caractérisé en ce que l'information de pression de l'air (P2) à l'entrée du moteur est acquise à l'aide d'un capteur tel qu'un capteur piézo-résistif (15) et traitée dans un amplificateur opérationnel (16), apte à ajuster sa tension de sortie proportionnellement à la pression absolue de l'air.

5.- Dispositif de régulation selon la revendication 4, caractérisé en ce que la tension de sortie de l'amplificateur opérationnel (16) est amplifiée dans un amplificateur à gain variable (17) dans lequel la résistance de la boucle de contre-réaction est fonction de la température de l'air à l'entrée du moteur, par tout moyen approprié tel que le montage dans la boucle de contre-réaction d'une thermistance sensible à cette température à l'entrée du moteur.

6.- Dispositif de régulation selon la revendication 4 ou 5, caractérisé en ce que l'amplificateur à gain variable (17) comporte à son entrée inverse une résistance variable (20) en fonction de la vitesse de rotation du moteur.

7.- Dispositif de régulation selon l'une des revendications 4 à 6, caractérisé en ce que l'information relative à la température des gaz d'échappement (T3) à l'entrée de l'organe de suralimentation, est adressée sous forme de signal de température d'échappement à un comparateur (18a) pour être comparée à une valeur de température de consigne (T3c), cette comparaison déclenchant, lorsque la pression absolue de l'air à l'entrée du moteur dépasse une valeur minimale (P2c), l'application à l'amplificateur opérationnel (16), fonctionnant en sommateur avec l'information de pression (P2), d'un signal proportionnel au dépassement de cette température de consigne (T3c) par la température (T3) des gaz d'échappement.

8.- Dispositif de régulation selon l'une des revendications 5 à 7, caractérisé en ce que la sortie de l'amplificateur à gain variable (17) est reliée, après ajustement éventuel dans un amplificateur de gain (22) du point zéro et du gain global, à un organe comparateur (23) travaillant en boucle ouverte et apte à comparer l'information issue de l'amplificateur de gain (22) avec l'information de position de came délivrée par le potentiomètre de recopie (24), pour produire un signal d'actionnement (26, 27) du moteur électrique (40) de déplacement de la came en rotation, signal dont la polarité de la tension détermine la rotation du moteur ( 40) dans le sens propre à supprimer le signal d'actionnement.

9.- Dispositif de régulation selon la revendication 8, caractérisé en ce que l'information de position délivrée par le potentiomètre de recopie (24) est dérivée et réinjectée dans l'amplificateur à gain variable (22) par tout moyen tel qu'un condensateur (36), en vue d'amortir les déplacements du moteur électrique (40).

10.- Dispositif selon la revendication 8 ou 9, caractérisé en ce qu'une fréquence de forme générale triangulaire (32) et de l'ordre du kilohertz (kHz) est injectée dans l'amplificateur de gain (22) pour augmenter l'impédance apparente du moteur électrique (40) de déplacement
de la came (8).

11.- Dispositif selon l'une quelconque des revendications 1 à
10, caractérisé en ce que, de façon connue en soi, la pédale d'accélération commande la translation de la came (8), et en ce que le moteur électrique (40) commande sa rotation.

FIG.1

FIG.2

2/3

0090121

FIG.3

FIG.4

Office européen
des brevets

RAPPORT DE RECHERCHE EUROPEENNE

0090121

Numéro de la demande

EP 82 40 1005

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | US-A-3 903 852 (A. SOLA) <br> * Colonne 3, lignes 29-56; colonne 4, ligne 54 - colonne 5, ligne 27; figures 1,2 * | 1,2,11 | F 02 D 5/02 <br> F 02 M 59/30 |
| | --- | | |
| Y | FR-A-2 117 255 (ROBERT BOSCH GmbH) <br> * Page 5, ligne 26 - page 6, ligne 40; figure 1 * | 1,2,11 | |
| | --- | | |
| A | US-A-4 112 879 (J. ASSENHEIMER et al.) <br> * Colonne 8, lignes 29-51; figures 15-17 * | 4 | |
| | --- | | |
| A | FR-A-2 369 422 (ROBERT BOSCH GmbH) <br> * Page 2, lignes 12-37; page 4, ligne 24 - page 5, ligne 9; page 6, ligne 29 - page 7, ligne 2; page 10, lignes 16-30; page 20, ligne 28 - page 21, ligne 14; figures 1,9,10 * | 1-3,5, 8,9 | **DOMAINES TECHNIQUES RECHERCHES (Int. Cl. ³)** <br><br> F 02 D <br> F 02 M 59/30 |
| | ----- | | |

Le présent rapport de recherche a été établi pour toutes les revendications

| Lieu de la recherche <br> LA HAYE | Date d'achèvement de la recherche <br> 07-07-1983 | Examinateur <br> MOUALED R. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03 82